# FASCICULE DE BREVET EUROPEEN

(11) **EP 1 312 993 B1**
(45) Date de publication et mention de la délivrance du brevet: **21.09.2005**
(21) Numéro de dépôt: 02078403.9
(22) Date de dépôt: 08.08.2002
(51) Int. Cl.: G05B 19/05

(54) **Equipement d'automatisme équipe d'une liaison de type USB**
Automatisierungseinrichtung mit USB-Verbindung
Automation equipment comprising a USB link

(30) Priorité: 03.09.2001 FR 0111507
(43) Date de publication de la demande: 21.05.2003
(73) Titulaire: Schneider Automation, 06560 Valbonne (FR)
(72) Inventeur: Genin, Jean-Jacques, 06100 Nice (FR)

(56) Documents cités:
- WO-A-01/09730
- WO-A-99/48608
- US-A- 4 058 711
- US-A- 4 638 452
- US-B1- 6 219 033

## Description

La présente invention concerne un équipement d'automatisme équipé d'une liaison de type USB (Universal Serial Bus) pour la connexion d'un ou plusieurs équipements distants.

De plus en plus de terminaux ou d'équipements de type PC sont équipés de liaisons de type USB qui simplifient le raccordement d'équipements distants, et offrent des débits beaucoup plus importants que les liaisons séries habituelles. De plus cette liaison permet de répartir la bande passante en fonction des besoins de communication. L'ouverture et la souplesse apportées par cette liaison ne doivent toutefois pas perturber le fonctionnement temps réel des équipements d'automatisme qui l'utilisent.

Un équipement d'automatisme désigne ci-après un automate programmable, une station de contrôle/commande, une commande numérique ou tout équipement pouvant contenir et exécuter un programme d'application dans le but d'effectuer une ou plusieurs fonctions de contrôle et/ou de commande de tout ou partie d'une application d'automatisme appartenant par exemple au domaine des automatismes industriels, des automatismes du bâtiment ou du contrôle/commande des réseaux électriques de distribution.

L'utilisation d'un tel type de liaison sur un équipement d'automatisme permettrait l'amélioration de la vitesse de transfert des données entre cet équipement d'automatisme et des équipements distants, tels que des périphériques, des terminaux, des systèmes de programmation, de diagnostic, de supervision, d'autres équipements d'automatisme ou autres. Cela permettrait également la résolution des problèmes de communication avec le monde des ordinateurs de type PC. En effet, les liaisons séries traditionnelles sont pilotées par logiciel et le comportement temporel est modifié par d'autres logiciels, dont l'exécution est plus prioritaire, comme les logiciels anti-virus, les économiseurs d'écrans, etc.... Dans le cas d'un réseau USB, la couche liaison, correspondant au niveau 2 du modèle de communication OSI, est gérée par un composant matériel dédié, aussi son fonctionnement devient indépendant des autres taches logicielles qui s'exécutent sur l'équipement.

Cette utilisation permettrait aussi avantageusement l'adoption sur les équipements d'automatisme des moyens de connexion standard du monde des ordinateurs PC, ce qui simplifierait le raccordement et réduirait donc les coûts de mise en oeuvre.

Toutefois, l'important débit disponible avec une liaison de type USB ne doit pas perturber le fonctionnement du programme d'application de l'équipement d'automatisme. Si la faible bande passante des liaisons séries asynchrones induit un flux sans conséquence sur le fonctionnement en temps réel de l'équipement d'automatisme, il n'en est plus de même avec une liaison très rapide. Il devient donc impératif d'adapter le flux entrant aux besoins et contraintes temps réel de l'application contrôlée.

Le problème survient essentiellement en réception de messages. L'allocation statique de bande passante conduirait à une réduction notable des performances du système par une diminution de sa réactivité. En effet pour répondre à des besoins instantanés, de réglage par exemple, il faudrait réserver des canaux de communication inutilisés la plupart du temps. Aussi, le débit admissible sur la prise terminal d'un équipement d'automatisme doit être calibré en fonction des contraintes de l'application. Le nombre de messages admissibles par cycle - unité de temps de l'application - sur la prise terminal de l'équipement d'automatisme dépend du modèle d'équipement d'automatisme. En effet, un modèle haut de gamme qui gère des applications volumineuses doit pouvoir assurer un débit beaucoup plus important qu'un modèle d'entrée de gamme, notamment pour répondre aux besoins des superviseurs. De plus, les débits peuvent varier suivant les applications d'automatisme car le nombre de cycles exécutés par seconde d'un programme d'application dans un équipement d'automatisme est aussi lié au type d'application. Par exemple pour une application d'automatisme concernant le contrôle/commande d'une machine, le temps de cycle est en général inférieur à 10 ms alors que celui d'une application de régulation est plutôt de l'ordre de 100 ms. Dans ce dernier cas, le nombre de messages traités par unité de temps sera donc plus faible.

Le document US6,219,033 décrit un ordinateur susceptible d'être relié à une interface homme-machine au moyen d'une liaison de type USB. Le document US2002/0133239 décrit un automate programmable comportant un connecteur de type USB. Néanmoins, ces deux documents ne fournissent pas de détails sur les moyens mis en oeuvre dans un équipement d'automatisme pour gérer les perturbations provoquées par les liaisons USB sur le fonctionnement d'un programme application exécuté par un tel équipement d'automatisme.

Un but de l'invention est donc de proposer l'utilisation d'une liaison USB sur un équipement d'automatisme comportant des moyens pour éviter de perturber le fonctionnement du programme application temps réel exécuté dans l'équipement d'automatisme.

Ce but est atteint par un équipement d'automatisme exécutant un programme d'application temps réel, pour effectuer une ou plusieurs fonctions de contrôle ou de commande dans une application d'automatisme, comportant une mémoire vive et un connecteur de type USB relié par un circuit de pilotage de bus USB à un bus interne de l'équipement d'automatisme. L'équipement d'automatisme comporte une tâche logicielle chargée d'asservir le flux des communications échangées sur le connecteur USB entre l'équipement d'automatisme et des équipements distants, aux caractéristiques du programme d'application exécuté dans l'équipement d'automatisme. Ladite tâche logicielle exploite une première zone mémoire variable de la mémoire vive, déclarée comme pile de réception de trames d'entrée et comme pile de réception de messages de sortie, la taille de la première zone mémoire étant définie par construction pour la pile de réception de trames d'entrée et par paramétrage pour la pile de réception de messages de sortie.

Selon une particularité, la tâche logicielle est activée périodiquement par une base de temps de l'équipement d'automatisme et traite la partie émission en déclenchant un module constructeur de trames.

Selon une autre particularité, la tâche logicielle est déclenchée en réception d'un message de communication par une interruption provenant du circuit de pilotage du bus USB et comporte un module constructeur de messages à destination du programme d'application, après synchronisation par la base de temps de l'équipement d'automatisme.

Selon une autre particularité, le constructeur de messages convertit des trames USB en messages exprimés dans le format du système d'exploitation de l'équipement d'automatisme et compréhensibles par l'application et inversement pour le constructeur de trames.

La tâche logicielle exploite une seconde zone mémoire variable de la mémoire vive de l'équipement d'automatisme, déclarée comme pile d'émission de trames de sortie et comme pile d'émission de messages d'entrée, la taille de la seconde zone mémoire variable étant affectée par construction pour la pile d'émission de trames de sortie et par paramétrage pour la pile d'émission de messages d'entrée.

Selon une autre particularité, la tâche logicielle comporte un module de paramétrage qui comprend une fonction logicielle de paramétrage des zones mémoires utilisées comme pile d'émission de messages d'entrée et comme pile de réception de messages de sortie.

Selon une autre particularité, la tâche logicielle comporte un module gestionnaire des messages entrants vers le programme d'application et un module gestionnaire les messages sortants provenant du programme d'application.

Selon une autre particularité, le module gestionnaire des messages entrants limite à une valeur déterminée le nombre de messages lus au début d'un cycle du programme d'application (par exemple quatre messages par cycle pour un modèle d'équipement d'automatisme de milieu de gamme).

Selon une autre particularité, l'équipement d'automatisme comporte un pilote qui déclenche la lecture des messages entrants en début de cycle du programme d'application et déclenche l'écriture des messages sortants en fin de cycle du programme d'application et avant le début du cycle suivant.

D'autres particularités et avantages de l'invention apparaîtront plus clairement à la lecture de la description ci-après faite en relation avec un mode illustratif mais non limitatif de réalisation de l'invention représenté dans les dessins ci-après dans lesquels
- la figure 1 représente le schéma d'une l'architecture de communication d'un équipement d'automatisme définie selon l'invention,
- la figure 2 schématise un exemple d'architecture d'un tel équipement d'automatisme.

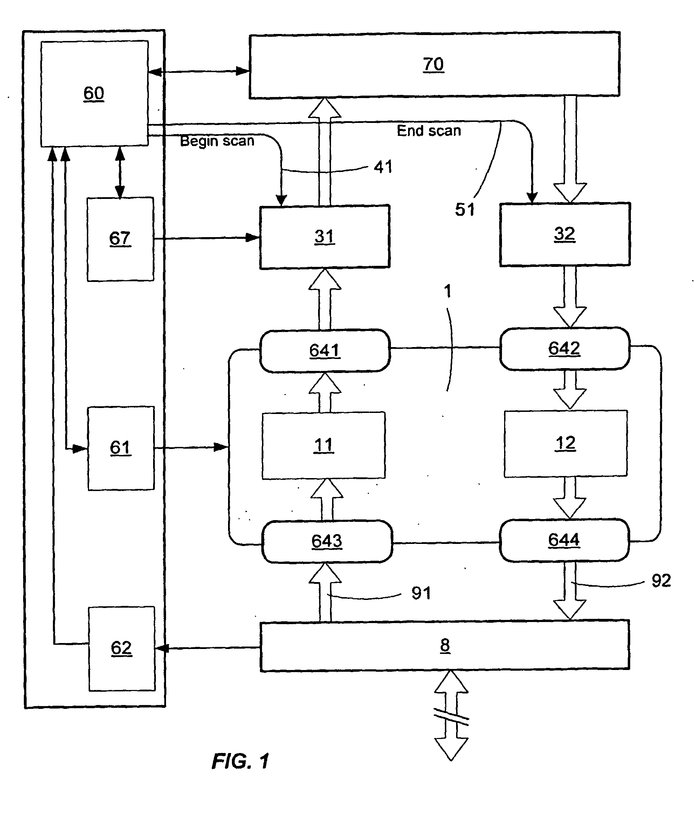

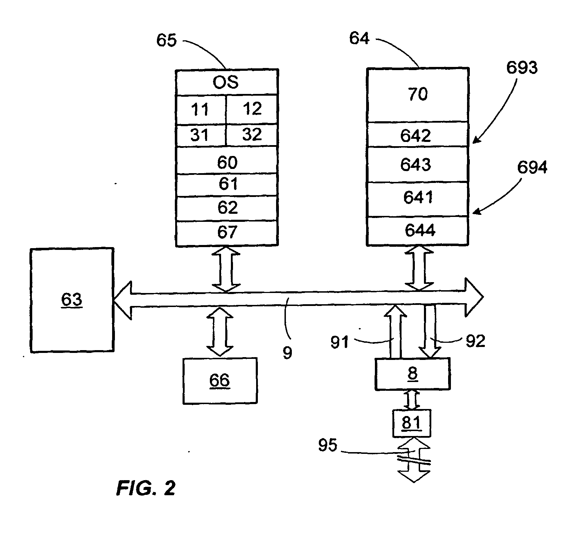

L'invention va être décrite en liaison avec les figures 1 et 2. L'invention concerne un équipement d'automatisme équipé d'un connecteur (81, fig. 2) de type USB non représenté sur la figure 1, lequel communique avec un ou plusieurs équipements distants extérieurs par une liaison (95, fig.1). Ce connecteur (81) de type USB est relié à un circuit (8) de pilotage d'un bus USB. Ce circuit (8) de pilotage du bus USB communique avec le bus interne (9) de l'équipement d'automatisme, en entrée par la liaison (91), en sortie par la liaison (92) du bus interne (9) de l'équipement d'automatisme. La structure classique d'un équipement d'automatisme est représentée à la figure 2 et est constituée généralement d'une unité centrale (63) constituée d'un ou plusieurs processeurs, d'une mémoire morte (65) de type ROM non modifiable ou de type FLASHPROM modifiable que l'on désignera par la suite par mémoire morte. Cette mémoire morte (65) contient le programme constructeur appelé système d'exploitation (operating system, OS). Ce programme de constructeur est généralement exprimé dans un langage spécifique au constructeur. L'équipement d'automatisme comporte également une mémoire vive (64) laquelle communique comme la mémoire morte (65) avec l'unité centrale (63) par le bus interne (9). Un gestionnaire d'entrée-sortie (66) de l'équipement d'automatisme est également relié au bus interne (9) et communique avec l'unité centrale (63). La mémoire vive (64) contient dans une première zone le programme temps réel de l'application (70) développé par l'utilisateur, appelé ci-après programme d'application, dans une deuxième zone les données, en particulier les images des états des coupleurs et les constantes relatives au programme d'application développé par l'utilisateur.

Nous rappellerons que le programme d'application est exécuté par l'unité centrale (63) et est chargé de faire le contrôle et/ou la commande d'une application d'automatisme grâce à des d'entrées-sorties pilotées par le gestionnaire des entrées-sorties (66) et le programme d'application. Le programme d'application élaboré par le concepteur-utilisateur est habituellement écrit dans un ou plusieurs langages graphiques d'automatisme intégrant notamment des schémas à contact (Ladder Diagram), des diagrammes fonctionnels en séquence (Sequential Function Chart) encore dénommés Grafcet, des blocs fonctions (Function Block Description) et/ou des listes d'instructions IL (Instruction List).

En plus des informations propres à l'application d'automatisme qui sont constituées par le programme d'application, les données et les entrées sorties mémorisées dans la mémoire vive (64), l'invention décrit la possibilité d'attribuer des zones mémoires (693, 694) variables de la mémoire vive (64). Une première zone mémoire (693) variable permet de constituer une pile FIFO (642) de réception de messages de sortie et une pile FIFO (643) de réception de trames d'entrée, et une seconde zone mémoire (694) variable permet de constituer une pile FIFO (641) d'émission de messages d'entrée et une pile FIFO (644) d'émission de trames de sortie. La taille de la première zone mémoire (693) est définie par construction pour la pile (643) de réception de trames d'entrée et par paramétrage pour la pile (642) de réception de messages de sortie. La taille de la seconde zone mémoire (694) est définie par construction pour la pile (644) d'émission de trames de sortie et par paramétrage pour la pile (641) d'émission de messages d'entrée. Les tailles des piles d'émission et de réception de trames (643,644) sont donc fixées par le constructeur de l'équipement d'automatisme, par exemple en fonction du modèle de l'équipement d'automatisme. En revanche, un paramétrage par l'utilisateur permet de définir les tailles des piles d'émission et de réception de messages (641,642), par exemple en fonction du type d'application d'automatisme contrôlée.

En plus des composants classiques d'un système d'exploitation d'un équipement d'automatisme standard, la mémoire ROM ou la mémoire PROM comprendra un certain nombre de modules logiciels dont les fonctions vont être explicitées ci-après.

Un premier module (60) joue le rôle de pilote ou gestionnaire de balayage (en anglais : "scan manager").

Un deuxième module (62) de gestion des interruptions (en anglais : "interrupt manager") gère les interruptions provenant du circuit (8) de pilotage du bus USB.

Un troisième module (61) gère la base de temps du système (en anglais : "system time base") et déclenche l'activation d'un module logiciel (1) de traitement de la messagerie USB comportant principalement un module constructeur de messages (11) (en anglais : "message builder") pour les communications entrantes et d'un module constructeur de trames (12) (en anglais : "frame builder") pour les communications sortantes. Ces modules (11,12) sont mémorisés dans la mémoire morte (65) et font partie du système d'exploitation (OS). Le module constructeur de messages (11) et le module constructeur de trames (12) mettent en conformité respectivement les trames entrantes au format de messages destinés au programme d'application et, inversement, les messages provenant du programme d'application et destinés en sortie à être transformés en trames puis émis vers le bus USB.

Le pilote (60) qui dialogue avec le programme d'application (70) génère à la fin de chaque cycle du programme d'application un signal (51) de fin de balayage (en anglais : "end scan"). Ce signal (51) permet de déclencher un module gestionnaire (32) de messages sortants (en anglais : "outgoing messages manager"), lequel va recevoir les informations destinées à remplir la pile (642) de réception de messages de sortie à émettre. De même, pour garantir la cohérence des messages, le pilote (60) émet également au début de chaque cycle du programme d'application un signal (41) de début de balayage (en anglais : "begin scan") lequel déclenche un module gestionnaire (31) de messages entrants (en anglais : "incoming messages manager") pour permettre la transmission des messages provenant de la pile (641) d'émission de messages d'entrée vers le programme d'application (70). Les modules gestionnaires de messages entrants (31) et de messages sortants (32) font partie du système d'exploitation (OS) mémorisé dans la mémoire morte (65) de l'équipement d'automatisme.

Ainsi, comme indiqué en figure 1, la pile (643) de réception de trames d'entrée sert de mémoire tampon entre le pilote de bus USB (8) et le constructeur de messages (11) et la pile (641) d'émission de messages d'entrée sert de mémoire tampon entre le constructeur de messages (11) et le gestionnaire (31) des messages entrants. De même, la pile (642) de réception de messages de sortie sert de mémoire tampon entre gestionnaire (32) des messages sortants et le constructeur de trames (12) et la pile (644) d'émission de trames de sortie sert de mémoire tampon entre le constructeur de trames (12) et le pilote de bus USB (8).

Un quatrième module de paramétrage (67) comporte une fonction logicielle de paramétrage permettant à un utilisateur de configurer une valeur limite prédéterminée du nombre de messages susceptibles d'être reçus au début d'un cycle du programme d'application (70) par la mémoire de l'équipement d'automatisme. Cette valeur limite détermine notamment la taille de la zone mémoire affectée à la pile (641) d'émission de messages d'entrée. Le module de paramétrage (67) fournit cette information au module gestionnaire (31) de messages entrants pour lui permettre de limiter le nombre de messages à recevoir en début de cycle. De même, le module de paramétrage (67) est également capable de permettre à un utilisateur de configurer une valeur limite prédéterminée du nombre de messages susceptibles d'être émis en fin de cycle du programme d'application (70). Cette valeur limite déterminera notamment la taille de la zone mémoire affectée à la pile (642) de réception de messages de sortie.

Périodiquement, par exemple environ toutes les millisecondes, le module de traitement de la messagerie USB (1) est déclenché. Ce module assure deux fonctions essentielles : fragmentation/défragmentation des trames USB et régulation du débit. La défragmentation consiste à convertir des trames USB de 64 octets en messages compréhensibles par le programme d'application et vice-versa la fragmentation consiste à convertir des messages compréhensibles par le programme d'application en trames USB de 64 octets.

Un message comprend généralement plusieurs trames. Lorsque la tâche de traitement de la messagerie USB est activée, elle commence par traiter la partie émission pour libérer des ressources internes mémoires. En effet, le flux généré par l'équipement d'automatisme est généralement largement inférieur aux capacités de réception des équipements distants disposant de moyens de communication de type USB. La phase de réception débute par un test de la place disponible dans la pile (641) d'émission de messages d'entrée. Lorsqu'il n'y a pas de place pour stocker au moins un message dans la pile (641), le constructeur de messages (11) termine son traitement sans dépiler la pile (643) de réception de trames d'entrée. Lorsqu'il y a de place pour stocker au moins un message dans la pile (641), le constructeur de messages (11) dépile la pile (643) et convertit les trames USB en un message d'entrée stocké dans la pile (641).

Le contrôle de flux est donc asservi au module logiciel pilote (60), asservi à la base de temps interne (61) de l'équipement d'automatisme et déclenché par un signal du gestionnaire d'interruption (62). Les messages sont construits par le constructeur de messages (11) et défragmentés uniquement lorsque des ressources mémoire vive (64) sont disponibles et la gestion des zones de piles FIFO (641 à 644) de la mémoire vive (64) est asservie au programme d'application (70).

Le pilote de bus USB (8) fonctionne en autonome par des interruptions déclenchées, soit par l'arrivée d'une trame, soit par la fin d'émission de la trame précédente. Le mécanisme d'acquittement négatif standard à une communication de type USB entre automatiquement en jeu lorsque toutes les ressources sont occupées en réception. Cet acquittement négatif est émis par le pilote de bus USB (8) lorsqu'une interruption déclenchée par l'arrivée d'une trame, n'a pu être traitée par le module (1) de traitement de la messagerie USB (quand la pile FIFO (643) de réception de trames d'entrée est pleine) et le pilote (60). Il revient alors à l'émetteur non représenté, d'adopter un comportement cohérent avec les débits admissibles par la liaison (95), par exemple en diminuant temporairement les demandes.

## Revendications

1. Équipement d'automatisme exécutant un programme d'application (70) dans le but d'effectuer une ou plusieurs fonctions de contrôle ou de commande dans une application d'automatisme, comportant une mémoire vive (64) et un connecteur de type USB (81) relié par un circuit de pilotage de bus USB (8) à un bus interne (9) de l'équipement d'automatisme, **caractérisé en ce qu'**il comporte une tâche logicielle (1,31,32,60,61,62,67) chargée d'asservir le flux des communications échangées sur le connecteur USB (81) entre l'équipement d'automatisme et des équipements distants, aux caractéristiques du programme d'application (70) exécuté dans l'équipement d'automatisme, et **en ce que** ladite tâche logicielle exploite une première zone mémoire variable (693) de la mémoire vive (64), déclarée comme pile (643) de réception de trames d'entrée et comme pile (642) de réception de messages de sortie, la taille de la première zone mémoire (693) étant définie par construction pour la pile (643) de réception de trames d'entrée et par paramétrage pour la pile (642) de réception de messages de sortie.

2. Équipement d'automatisme selon la revendication 1, **caractérisé en ce que** la tâche logicielle (1,31,32,60,61,62,67) est activée périodiquement par une base de temps (61) de l'équipement d'automatisme et traite la partie émission de la communication en déclenchant un module constructeur de trames (12), le constructeur de trames (12) convertissant des messages exprimés dans le format du système d'exploitation de l'équipement d'automatisme et compréhensibles par le programme d'application (70) en trames USB.

3. Équipement d'automatisme selon la revendication 1, **caractérisé en ce que** la tâche logicielle (1,31,32,60,61,62,67) est déclenchée en réception d'un message de communication par une interruption provenant du circuit (8) de pilotage du bus USB et comporte un module constructeur de messages (11) à destination du programme d'application (70), après synchronisation par une base de temps (61) de l'équipement d'automatisme, le constructeur de messages (11) convertissant des trames USB en messages exprimés dans le format du système d'exploitation de l'équipement d'automatisme et compréhensibles par le programme d'application (70).

4. Équipement d'automatisme selon la revendication 1, **caractérisé en ce que** la tâche logicielle (1,31,32,60,61,62,67) exploite une seconde zone mémoire variable (694) de la mémoire vive (64) de l'équipement d'automatisme déclarée comme pile (644) d'émission de trames de sortie et comme pile (641) d'émission de messages d'entrée, la taille de la seconde zone mémoire variable (694) étant affectée par construction pour la pile (644) d'émission de trames de sortie et par paramétrage pour la pile (641) d'émission de messages d'entrée.

5. Équipement d'automatisme selon la revendication 4, **caractérisé en ce** la tâche logicielle (1,31,32,60,61,62,67) comporte un module de paramétrage (67) qui comprend une fonction logicielle de paramétrage des zones mémoires variables utilisées comme pile (642) de réception de messages et comme pile (641) d'émission de messages.

6. Équipement d'automatisme selon la revendication 5, **caractérisé en ce que** la tâche logicielle (1,31,32,60,61,62,67) comporte un module gestionnaire des messages entrants (31) vers le programme d'application (70) et un module gestionnaire des messages sortants (32) provenant du programme d'application (70).

7. Équipement d'automatisme selon la revendication 6, **caractérisé en ce que** le module gestionnaire des messages entrants (31) limite à une valeur déterminée le nombre de messages lus au début d'un cycle du programme d'application (70).

8. Équipement d'automatisme selon la revendication 6, **caractérisé en ce qu'**il comporte un pilote (60) qui déclenche la lecture des messages entrants en début de cycle du programme d'application (70) et déclenche l'écriture des messages sortants en fin de cycle du programme d'application (70) et avant le début du cycle suivant.

## Claims

1. Automation equipment executing an application program (70) in order to carry out one or more monitoring or control functions in an automation application and including a random access memory (64), **characterised in that** it includes a USB type connector (81) connected via a USB bus driver circuit (8) to an internal bus (9) of the automation equipment and a software task (1,31,32,60,61,62,67) in charge of controlling the flow of communications exchanged over the USB connector (81) between the automation equipment and remote equipment, with the characteristics of the application program (70) executed in the automation equipment, and **in that** said software task utilises a first variable memory area (693) of the random access memory (64), declared as a of input frame reception stack (643), and as an output message reception stack (642); the size of the first memory area (693) is defined by generation for the input frame reception stack (643) and by configuration for the output message reception stack (642).

2. Automation equipment according to claim 1, **characterised in that** the software task (1,31,32,60,61,62,67) is periodically activated by a time base (61) of the automation equipment and processes the transmission portion of the communication by triggering a frame builder module (12); the frame builder module (12) converts the messages expressed in the format of the operating system of the automation equipment and understandable by the application program (70) in USB frames.

3. Automation equipment according to claim 1, **characterised in that** the software task (1,31,32,60,61,62,67) is triggered upon receiving a communications message via an interrupt from the USB bus driver circuit (8) and includes a message builder module (11) for the application program (70), after synchronization of the automation equipment with the time base (61); the message builder (11) converts the USB frames into messages expressed in the format of the operating system of the automation equipment and understandable by the application program (70).

4. Automation equipment according to claim 1, **characterised in that** the software task (1,31,32,60,61,62,67) utilizes a second variable memory area (694) of the random access memory (64) of the automation equipment declared as an output frame transmission stack (644) and as an input message transmission stack (641); the size of the second variable memory area (694) is allocated for the output frame transmission stack (644) by generation and for the input message transmission stack (641) by configuration.

5. Automation equipment according to claim 4, **characterized in that** the software task (1,31,32,60,61,62,67) includes a configuration module (67) that comprises a software function for configuring variable memory areas used as a message reception stack (642) and as a message transmission stack (641).

6. Automation equipment according to claim 5, **characterised in that** the software task (1,31,32,60,61,62,67) includes a module for managing the incoming messages (31) to the application program (70) and a module for managing the output messages (32) from the application program (70).

7. Automation equipment according to claim 6, **characterised in that** the module for managing the incoming messages (31) limits the number of messages read at the beginning of a cycle of the application program (70), to a determined value.

8. Automation equipment according to claim 6, **characterised in that** it includes a driver (60) that triggers the reading of incoming messages at the beginning of the cycle of the application program (70) and triggers the writing of the output messages at the end of the cycle of the application program (70) and before the beginning of the next cycle.

## Patentansprüche

1. Automatisierungseinrichtung, die ein Anwendungsprogramm (70) ausführt, um eine oder mehrere Überwachungs- oder Steuerungsfunktionen in einer Automatisierungsanwendung durchzuführen, mit einem Arbeitsspeicher (64) und einem USB-Verbinder (81), der über eine USB-Bus-Steuerschaltung (8) mit einem internen Bus (9) der Automatisierungseinrichtung verbunden ist, **dadurch gekennzeichnet, dass** sie eine Software-Task (1, 31, 32, 60, 61, 62, 67) aufweist, die dazu bestimmt ist, den Fluss der auf dem USB-Verbinder (81) zwischen der Automatisierungseinrichtung und entfernten Einrichtungen ausgetauschten Kommunikationen den Eigenschaften des in der Automatisierungseinrichtung durchgeführten Anwendungsprogramms (70) unterzuordnen, und dass die Software-Task eine erste variable Speicherzone (693) des Arbeitsspeichers (64) nutzt, die als Empfangsstapel (643) von Eingangsrahmen und als Empfangsstapel (642) von Ausgangsnachrichten bezeichnet wird, wobei die Größe der ersten Speicherzone (693) durch Konstruktion für den Empfangsstapel (643) von Eingangsrahmen und durch Parametrierung für den Empfangsstapel (642) von Ausgangsnachrichten definiert wird.

2. Automatisierungseinrichtung nach Anspruch 1, **dadurch gekennzeichnet, dass** die Software-Task (1, 31, 32, 60, 61, 62, 67) periodisch von einer Zeitbasis (61) der Automatisierungseinrichtung aktiviert wird und den Sendebereich der Kommunikation verarbeitet, indem sie einen Rahmenkonstruktormodul (12) auslöst, wobei der Rahmenkonstruktor (12) Nachrichten, die im Format des Betriebssystems der Automatisierungseinrichtung ausgedrückt und für das Anwendungsprogramm (70) verständlich sind, in USB-Rahmen konvertiert.

3. Automatisierungseinrichtung nach Anspruch 1, **dadurch gekennzeichnet, dass** die Software-Task (1, 31, 32, 60, 61, 62, 67) beim Empfang einer Kommunikationsnachricht durch eine Unterbrechung ausgelöst wird, die von der USB-Bus-Steuerschaltung (8) kommt, und einen Konstruktormodul (11) von für das Anwendungsprogramm (70) bestimmten Nachrichten nach Synchronisation durch eine Zeitbasis (61) der Automatisierungseinrichtung aufweist, wobei der Nachrichtenkonstruktor (11) USB-Rahmen in Nachrichten konvertiert, die im Format des Betriebssystems der Automatisierungseinrichtung ausgedrückt und für das Anwendungsprogramm (70) verständlich sind.

4. Automatisierungseinrichtung nach Anspruch 1, **dadurch gekennzeichnet, dass** die Software-Task (1, 31, 32, 60, 61, 62, 67) eine zweite variable Speicherzone (694) des Arbeitsspeichers (64) der Automatisierungseinrichtung nutzt, die als Sendestapel (644) von Ausgangsrahmen und als Sendestapel (641) von Eingangsnachrichten bezeichnet wird, wobei die Größe der zweiten variablen Speicherzone (694) durch Konstruktion für den Sendestapel (644) von Ausgangsrahmen und durch Parametrierung für den Sendestapel (641) von Eingangsnachrichten zugeordnet wird.

5. Automatisierungseinrichtung nach Anspruch 4, **dadurch gekennzeichnet, dass** die Software-Task (1, 31, 32, 60, 61, 62, 67) einen Parametrierungsmodul (67) aufweist, der eine Softwarefunktion der Parametrierung der variablen Speicherzonen enthält, die als Empfangsstapel (642) von Nachrichten und als Sendestapel (641) von Nachrichten verwendet werden.

6. Automatisierungseinrichtung nach Anspruch 5, **dadurch gekennzeichnet, dass** die Software-Task (1, 31, 32, 60, 61, 62, 67) einen Verwaltungsmodul (31) der zum Anwendungsprogramm (70) eingehenden Nachrichten und einen Verwaltungsmodul (32) der vom Anwendungsprogramm (70) kommenden, ausgehenden Nachrichten aufweist.

7. Automatisierungseinrichtung nach Anspruch 6, **dadurch gekennzeichnet, dass** der Verwaltungsmodul (31) der eingehenden Nachrichten die Anzahl von zu Beginn eines Zyklus des Anwendungsprogramms (70) gelesenen Nachrichten auf einen bestimmten Wert begrenzt.

8. Automatisierungseinrichtung nach Anspruch 6, **dadurch gekennzeichnet, dass** sie einen Treiber (60) aufweist, der zu Beginn des Zyklus des Anwendungsprogramms (70) das Lesen der eingehenden Nachrichten auslöst und am Ende des Zyklus des Anwendungsprogramms (70) und vor dem Beginn des folgenden Zyklus das Schreiben der ausgehenden Nachrichten auslöst.
